(19) Europäisches Patentamt
European Patent Office
Office européen des brevets

(11) Numéro de publication: **0 252 559 B1**

(12) **FASCICULE DE BREVET EUROPEEN**

(45) Date de publication de fascicule du brevet:
**12.06.91**

(51) Int. Cl.⁵: **H01M 8/22**, H01M 8/08

(21) Numéro de dépôt: **87201247.1**

(22) Date de dépôt: **30.06.87**

(54) **Procédé pour la production d'électricité dans une pile à combustible, et pile à combustible.**

(30) Priorité: **09.07.86 FR 8610144**

(43) Date de publication de la demande:
**13.01.88 Bulletin 88/02**

(45) Mention de la délivrance du brevet:
**12.06.91 Bulletin 91/24**

(84) Etats contractants désignés:
**AT BE CH DE ES GB IT LI NL SE**

(56) Documents cités:
**GB-A- 1 062 094**

(73) Titulaire: **INTEROX Société Anonyme**
**Rue du Prince Albert, 33**
**B-1050 Bruxelles(BE)**

(72) Inventeur: **Tytgat, Daniel**
**Avenue de Janvier, 23**
**B-1200 Bruxelles(BE)**
Inventeur: **Reignier, Marianne**
**Boulevard de la Fleur de Lys, 24**
**B-1400 Nivelles(BE)**
Inventeur: **Dujardin, François**
**Rue Léon Mignon, 22**
**B-1030 Bruxelles(BE)**

(74) Mandataire: **Anthoine, Paul et al**
**SOLVAY & Cie Département de la Propriété**
**Industrielle 310, rue de Ransbeek**
**B-1120 Bruxelles(BE)**

## Description

L'invention concerne les piles à combustible.

Elle concerne en particulier un procédé pour la production d'électricité, mettant en oeuvre une pile à combustible.

Pour produire de l'énergie électrique au moyen d'une pile à combustible, on alimente les interfaces anode/anolyte et cathode/catholyte de la pile avec respectivement un combustible et un comburant. Selon le document US-A-3657015, on met en oeuvre une pile à combustible dans laquelle le compartiment anodique et le compartiment cathodique sont isolés par un séparateur perméable aux ions et contiennent respectivement un anolyte alcalin et un catholyte acide, le combustible utilisé étant de l'hydrazine et le comburant, de l'acide nitrique. Ce procédé connu présente l'inconvénient de générer des oxydes d'azote, toxiques. Il implique par ailleurs la mise en oeuvre d'un combustible coûteux.

Selon le document US-A-3446671, on met en oeuvre une pile à combustible dans laquelle l'anolyte et le catholyte sont tous les deux acides, et on utilise un composé peroxydé (de préférence du peroxyde d'hydrogène) pour le comburant et un alcool pour le combustible. Ce procédé connu implique également un combustible coûteux et il génère de l'anhydride carbonique dans l'atmosphère.

L'invention remédie à ces inconvénients, en fournissant un procédé nouveau, facile et économique pour la production d'électricité par la technique des piles à combustible, ce procédé ne générant pas de produit toxique ni polluant.

En conséquence, l'invention concerne un procédé pour la production d'électricité, selon lequel on introduit, dans une pile à combustible, un combustible et un comburant respectivement à l'interface d'une anode et d'un anolyte alcalin de la pile et à l'interface d'une cathode et d'un catholyte acide isolé de l'anolyte alcalin par un séparateur perméable aux ions; selon l'invention, on met en oeuvre du peroxyde d'hydrogène pour le combustible.

Dans le procédé selon l'invention, l'anode et la cathode de la pile à combustible doivent être en un matériau conducteur de l'électricité et inerte chimiquement vis-à-vis des électrolytes, du combustible et du comburant. On peut par exemple les réaliser en graphite, en carbone, en un métal sélectionné parmi les éléments de transition du tableau périodique des éléments, tels que le nickel, le ruthénium, le platine et l'or, par exemple, ou en un alliage comprenant au moins un de ces éléments, par exemple les alliages palladium-or. D'autres exemples d'électrodes utilisables dans le cadre de l'invention sont celles comprenant un support en un matériau filmogène (sélectionné parmi le titane, le zirconium, l'hafnium, le vanadium, le niobium, le tantale et les alliages de ces métaux) et un revêtement conducteur comprenant un oxyde d'au moins un métal sélectionné parmi le platine, le palladium, l'iridium, le rhodium, l'osmium et le ruthénium, comme décrit dans les documents FR-A-1479762 et FR-A-1555960 (H.B. Beer). Des électrodes de ce type, spécialement recommandées, sont celles dans lesquelles le revêtement comprend un composé de formule générale $Rh_2TeO_6$, $Rh_2WO_6$, $Rh_2MoO_6$ ou $RhSbO_4$ (documents FR-A-2099647, 2099648, 2099649, 2121511, 2145485 - SOLVAY & Cie). Dans ces électrodes, le support en matériau filmogène peut éventuellement envelopper un noyau en un matériau meilleur conducteur de l'électricité tel que du cuivre ou de l'aluminium.

Le séparateur a pour fonction de séparer physiquement le catholyte acide et l'anolyte alcalin, tout en permettant le passage d'ions. A cet effet, il peut être une membrane microporeuse inerte, par exemple en un polymère fluoré tel que le polyfluorure de vinylidène ou le polytétrafluoroéthylène. On préfère utiliser une membrane à perméabilité sélective aux anions ou aux cations, par exemple une membrane cationique vendue dans le commerce sous la marque "NAFION" (Du Pont) qui est une feuille en polymère perfluoré contenant des groupements fonctionnels dérivés de l'acide sulfonique.

Dans la pile à combustible mise en oeuvre conformément à l'invention, l'anolyte est un électrolyte alcalin et le catholyte est un électrolyte acide. Toutes autres choses égales, la tension obtenue aux bornes de la pile est d'autant plus élevée que la différence est grande entre le pH de l'anolyte et le pH du catholyte. Il est généralement souhaitable que cette différence de pH soit au moins égale à 7, de préférence supérieure à 10.

Par ailleurs, conformément à une forme de réalisation particulière du procédé selon l'invention, il est avantageux de maintenir, dans le compartiment anodique, une valeur de pH supérieure à 11,63 qui est celle correspondant à une dissociation de 50 % du peroxyde d'hydrogène selon l'équation

$H_2O_2 \leftrightharpoons HO_2 + H^+$

Les valeurs de pH préférées sont celles supérieures à 13 dans le compartiment anodique et inférieures

2

à 2 dans le compartiment cathodique. A cet effet, l'anolyte peut être par exemple une solution aqueuse d'hydroxyde de métal alcalin et le catholyte peut par exemple être une solution aqueuse d'acide chlorhydrique ou sulfurique, éventuellement additionnée d'acide phosphorique. Les solutions aqueuses concentrées d'hydroxyde de sodium et d'acide sulfurique sont préférées.

Selon l'invention, on met en oeuvre du peroxyde d'hydrogène comme combustible à l'anode de la pile à combustible.

Bien que ne souhaitant pas être liés par une explication théorique, les inventeurs pensent que la réaction électrochimique à l'anode est la suivante : $HO_2 + OH^- \rightarrow O_2\uparrow + H_2O + 2e^-$

Le procédé selon l'invention présente ainsi la particularité avantageuse de générer de l'oxygène qui peut être facilement valorisé.

Dans le procédé selon l'invention, le peroxyde d'hydrogène peut être mis en oeuvre à l'état pur ou à l'état d'une solution aqueuse. Les solutions aqueuses du commerce, contenant environ 70 % en poids de peroxyde d'hydrogène conviennent bien.

Le procédé selon l'invention peut être exécuté à toutes températures et pressions compatibles avec la stabilité du peroxyde d'hydrogène et le maintien des électrolytes à l'état liquide. Il est de préférence exécuté à une température n'excédant pas 60°C, la température ambiante étant spécialement avantageuse.

Dans une forme de réalisation particulière du procédé selon l'invention, destinée à en améliorer le rendement, on incorpore un stabilisant du peroxyde d'hydrogène dans l'anolyte alcalin du compartiment anodique. Le stabilisant est de préférence sélectionné parmi les polyols; des exemples de polyols préférés sont la glycérine, le polyéthylène glycol et l'éthylène glycol.

Dans une forme d'exécution spécialement avantageuse du procédé selon l'invention, on met en oeuvre du peroxyde d'hydrogène, à la fois comme combustible à l'anode et comme comburant à la cathode.

Bien que ne souhaitant pas être liés par une explication théorique, les inventeurs pensent que la réaction électrochimique à la cathode est la suivante :

$$H_2O_2 + 2H^+ + 2e^- \rightarrow 2H_2O$$

Cette forme d'exécution du procédé selon l'invention présente ainsi la particularité remarquable et avantageuse de ne pas libérer de produits toxiques ou polluants.

Dans une variante de cette forme d'exécution du procédé selon l'invention, on introduit dans le catholyte acide, des ions électro-actifs sélectionnés parmi les ions $Fe^{3+}$, $Cu^{2+}$ et $UO_2^+$.

Dans la forme d'exécution précitée du procédé selon l'invention, les réactions électrochimiques du peroxyde d'hydrogène à l'anode et à la cathode ont pour résultat une augmentation progressive du pH du catholyte et une diminution du pH de l'anolyte, ce qui implique que les électrolytes doivent être régénérés. La régénération des électrolytes peut être opérée de manière périodique ou continue, en veillant à maintenir les pH aux valeurs imposées. Selon l'invention, un mode de régénération avantageux de l'anolyte et du catholyte de la pile à combustible consiste à les faire circuler respectivement dans le compartiment cathodique et dans le compartiment anodique d'une seconde pile à combustible alimentée avec un composé hydrogéné pour le combustible. Dans ce mode de régénération, le combustible utilisé dans la seconde pile doit être un composé hydrogéné susceptible de libérer des protons à l'anode. Il peut par exemple être du méthane, de l'hydrazine ou, de préférence, de l'hydrogène. Le comburant peut par exemple être de l'air, de l'oxygène ou du peroxyde d'hydrogène. Dans un mode d'exécution spécialement avantageux de cette forme de réalisation de l'invention, les électrolytes sont mis à circuler de manière continue entre les deux piles à combustible et le comburant nécessaire au fonctionnement de la seconde pile est de l'oxygène produit dans la première pile et/ou du peroxyde d'hydrogène entraîné dans l'électrolyte provenant du compartiment anodique de la première pile.

L'invention concerne aussi une pile à combustible mettant en oeuvre le procédé selon l'invention, ladite pile comprenant une enceinte divisée par un séparateur perméable aux ions, en un compartiment anodique contenant un anolyte alcalin et un combustible et un compartiment cathodique contenant un catholyte acide et un comburant, caractérisée en ce que le combustible est du peroxyde d'hydrogène.

Dans une forme de réalisation préférée de la pile à combustible selon l'invention, le comburant de la pile à combustible est du peroxyde d'hydrogène. Dans une variante spécialement avantageuse de cette forme de réalisation de la pile à combustible selon l'invention, les compartiments anodique et cathodique de la pile à combustible sont couplés respectivement à un dispositif de régénération de l'anolyte alcalin et à un dispositif de régénération du catholyte acide; le dispositif de régénération de l'anolyte et le dispositif de régénération du catholyte sont respectivement le compartiment cathodique et le compartiment anodique d'une seconde pile à combustible alimentée avec de l'hydrogène à titre de combustible et avec de l'oxygène ou du peroxyde d'hydrogène à titre de comburant. Dans la seconde pile, l'utilisation d'un combustible gazeux implique que l'anode soit une électrode poreuse. Dans le cas où le comburant sélectionné est de l'air ou de l'oxygène, la cathode doit également être une électrode poreuse.

Des particularités et détails de l'invention vont ressortir de la description suivante de quelques formes de réalisation, en référence aux dessins annexés.

La figure 1 est un schéma d'une pile à combustible mettant en oeuvre le procédé selon l'invention;

La figure 2 est un schéma d'une installation de trois piles à combustible, mettant en oeuvre une forme de réalisation particulière de l'invention.

Dans ces figures, des mêmes notations de référence désignent des éléments identiques.

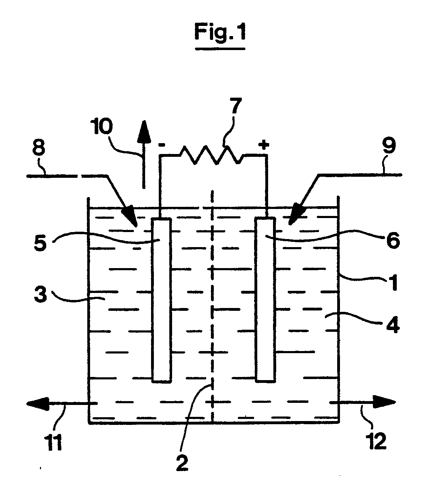

La pile à combustible schématisée à la figure 1 comprend une enceinte 1 divisée, par un séparateur 2, en deux compartiments respectivement anodique 3 et cathodique 4. Le séparateur 2 est une membrane perméable aux ions; il est avantageusement une membrane cationique formée d'un polymère perfluoré comprenant des groupements fonctionnels sulfoniques, par exemple une membrane "NAFION" (Du Pont).

Le compartiment anodique 3 contient une anode 5 et le compartiment cathodique 4 contient une cathode 6. L'anode 5 et la cathode 6 sont par exemple des tiges ou des plaques en titane portant un revêtement en un matériau de formule générale $RhSbO_4,RuO_2$ tel que décrit dans le document FR-A-2145 485 (Solvay & Cie).

Le compartiment anodique 3 contient une solution aqueuse d'hydroxyde de sodium et le compartiment cathodique 4 contient une solution aqueuse d'acide sulfurique.

Selon l'invention, pour générer un courant électrique dans la résistance 7 joignant les électrodes 5 et 6, on introduit de manière continue des solutions aqueuses de peroxyde d'hydrogène 8 et 9 simultanément dans le compartiment anodique 3 et dans le compartiment cathodique 4, et on évacue l'oxygène 10 produit à l'anode et des fractions 11 et 12 de l'anolyte et du catholyte pour maintenir les niveaux des électrolytes sensiblement constants dans les chambres 3 et 4.

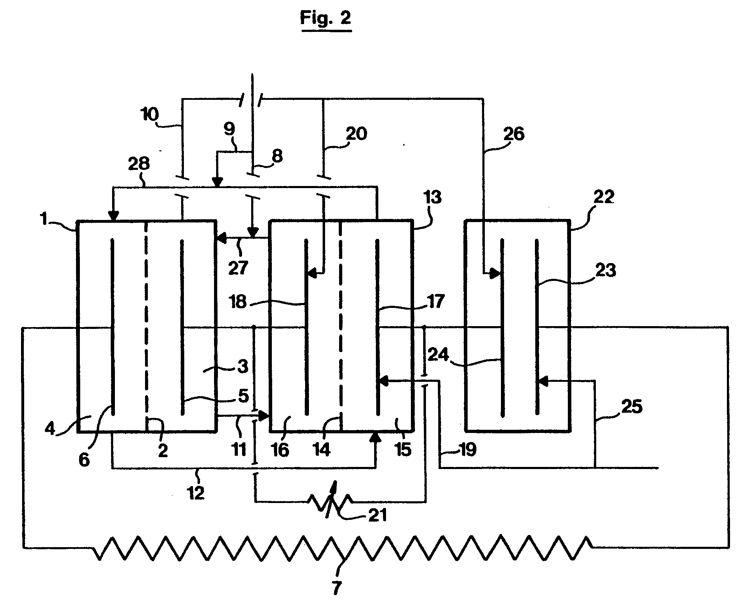

L'installation représentée à la figure 2 comprend la pile à combustible 1 décrite plus haut et deux piles à combustible additionnelles désignées 13 et 22.

La pile 13 est divisée par une membrane perméable aux ions 14, en deux compartiments respectivement anodique 15 et cathodique 16, contenant une anode 17 et une cathode 18.

La pile 22 est une pile à combustible du type oxygène/hydrogène. Elle comporte une enceinte unique contenant un électrolyte acide (par exemple une solution aqueuse concentrée d'acide phosphorique) dans lequel sont immergées une anode 23 et une cathode 24.

Les électrodes 17, 18, 23 et 24 des piles 13 et 22 sont des électrodes poreuses bien connues de la technique, dont la face électro-active peut être un matériau du même type que ceux cités plus haut pour les électrodes 5 et 6 de la pile 1. Les électrodes 5 et 18, d'une part, et 17 et 24, d'autre part, sont reliées entre elles de manière que les trois piles soient couplées en série électrique.

Conformément au procédé selon l'invention, pendant le fonctionnement de l'installation de la figure 2, on fait circuler en permanence les électrolytes entre les compartiments anodique 3 de la pile 1 et cathodique 16 de la pile 13 via le circuit 11 et 27, d'une part et entre les compartiments cathodique 4 de la pile 1 et anodique 15 de la pile 13 via le circuit 12 et 28, d'autre part. On introduit des solutions aqueuses de peroxyde d'hydrogène 8 et 9 dans les compartiments anodique 3 et cathodique 4 de la pile 1, on prélève une fraction 20 du courant d'oxygène 10 généré à l'anode 5 de la pile 1 et on l'introduit à titre de comburant dans la cathode 18 de la pile 13; simultanément, on introduit de l'hydrogène 19 à titre de combustible dans l'anode 17 de la pile 13. Simultanément, on alimente les électrodes poreuses 23 et 24 de la pile à combustible 22 avec de l'hydrogène 25 et avec la fraction restante 26 du courant d'oxygène 10. On recueille de l'énergie électrique dans un récepteur schématisé par la résistance 7 reliant les électrodes 6 et 23.

Dans l'installation représentée à la figure 2, les réactions électrochimiques aux électrodes 17 et 18 de la pile 13 sont les suivantes :

A l'anode : $H_2 \rightarrow 2H^+ + 2e^-$

A la cathode : $1/2\ O_2 + H_2O + 2e^- \rightarrow 2OH^-$

Elles ont pour effet de régénérer les électrolytes de la pile 1.

L'installation peut avantageusement comprendre une résistance réglable 21, montée en dérivation sur la pile 13. En réglant de manière adéquate la résistance 21 ainsi que les débits des électrolytes entre les deux piles 1 et 13, via les circuits 11 et 27, 12 et 28, on réalise dans les compartiments 3 et 4 de la pile 1, les valeurs de pH adéquates.

Dans l'exploitation de l'installation de la figure 2, il est nécessaire de prévoir des rupteurs galvaniques, non représentés, sur les circuits 11, 27, 12 et 28 des électrolytes, pour éviter une mise en court-circuit des piles 1 et 13. Un catalyseur de décomposition du peroxyde d'hydrogène, non représenté, est par ailleurs

4

incorporé dans le circuit 12, pour éviter d'introduire ce réactif dans le compartiment anodique 15 de la pile 13.

Dans une forme de réalisation modifiée, non représentée, de l'installation de la figure 2, le circuit 11 ne comporte pas de catalyseur de décomposition du peroxyde d'hydrogène, et la cathode 18 de la pile 13 n'est pas en communication avec une admission d'oxygène 20. Dans cette installation, le comburant utilisé dans la pile 13 est du peroxyde d'hydrogène contenu dans l'électrolyte provenant du compartiment anodique 3 de la pile 1 et introduit dans la pile 13, via le circuit 11.

Les exemples suivants vont faire ressortir les possibilités du procédé et de la pile à combustible selon l'invention.

Exemple 1

On a utilisé une pile comprenant, dans une enceinte :
- une cathode formée d'un treillis en titane portant un revêtement actif constitué d'un mélange de dioxyde de titane et d'oxyde de ruthénium en quantités équimolaires; la cathode présentait une surface active totale de 40 cm$^2$;
- une anode formée d'un disque en carbone de 60 mm de diamètre sur 5 mm d'épaisseur, percé de 32 trous de 4 mm de diamètre et présentant une surface globale de 74,9 cm$^2$;
- une membrane à perméabilité sélective du type cationique, interposée entre l'anode et la cathode et constituée d'une feuille en polymère perfluoré contenant des groupes sulfoniques, de marque NAFION® 110X (Du Pont).
La distance entre l'anode et la cathode était de 1 cm.
On a introduit dans la pile:
- 1 l d'une solution aqueuse d'acide nitrique (8 moles/l), dans le compartiment cathodique;
- 1 l d'une solution aqueuse d'hydroxyde de potassium (3 mcles/l), contenant du polyéthylèneglycol, dans le compartiment anodique;
- 20 g de peroxyde d'hydrogène dans le compartiment anodique, à titre de combustible.
On a maintenu une température d'environ 20°C dans la pile.
On a mesuré, en fonction de l'intensité du courant débité par la pile :
- la tension (U) aux bornes de la pile;
- la puissance utile (Pu) de la pile.
Pour une intensité de courant nulle (circuit ouvert) on a mesuré : U = 1,16 V.
Pour une densité de courant anodique de 10,0 mA/cm$^2$ on a mesuré :
U = 0,65 V
Pu = 0,51 W.

Exemple 2

Dans cet exemple, on a utilisé du peroxyde d'hydrogène à la fois comme combustible et comme comburant. A cet effet, on a utilisé une pile comprenant :
- une cathode formée d'un treillis en titane portant un revêtement d'oxydes de ruthénium, de rhodium et d'antimoine, de formule générale : $2RuO_2 \cdot RhSbO_4$; la cathode présentait une surface totale de 40 cm$^2$;
- une anode formée d'un treillis en titane portant un revêtement d'oxydes de rhodium et d'antimoine de formule générale : $RhSbO_4$; la surface active totale de l'anode était égale à 40 cm$^2$;
- une membrane identique à celle équipant la pile de l'exemple 1.
Une distance de 1 cm séparait l'anode de la cathode.
On a introduit dans la pile :
- pour le catholyte : 1 l d'une solution aqueuse contenant 3 moles d'acide sulfurique et 5 g d'ions ferriques;
- pour l'anolyte : 1 l d'une solution aqueuse contenant 3 moles d'hydroxyde de potassium et du polyéthylèneglycol.
La température étant maintenue à environ 20°C, on a introduit du peroxyde d'hydrogène simultanément dans le compartiment anodique et dans le compartiment cathodique, à raison de 20 g par compartiment. On a mesuré :

- pour une intensité de courant nulle : U = 0,91 V;
- pour une densité de courant anodique de 32,0 mA/cm² : U = 0,50 V

$$Pu = 0,65 \ W$$

- pour une densité de courant anodique de 10,0 mA/cm² : U = 0,80 V

$$Pu = 0,32 \ W$$

**Revendications**

1. Procédé pour la production d'électricité selon lequel on introduit, dans une pile à combustible, un combustible et un comburant respectivement à l'interface d'une anode et d'un anolyte alcalin de la pile et à l'interface d'une cathode et d'un catholyte acide isolé de l'anolyte alcalin par un séparateur perméable aux ions, caractérisé en ce qu'on met en oeuvre du peroxyde d'hydrogène pour le combustible.

2. Procédé selon la revendication 1, caractérisé en ce qu'on met en oeuvre du peroxyde d'hydrogène pour le comburant.

3. Procédé selon la revendication 1 ou 2, caractérisé en ce qu'on maintient une différence au moins égale à 7 entre le pH de l'anolyte alcalin et le pH du catholyte acide.

4. Procédé selon la revendication 3, caractérisé en ce qu'on maintient le pH de l'anolyte alcalin à une valeur au moins égale à 11,63.

5. Procédé selon la revendication 4, caractérisé en ce qu'on maintient le pH de l'anolyte alcalin à une valeur au moins égale à 13 et le pH du catholyte acide à une valeur égale au maximum à 2.

6. Procédé selon l'une quelconque des revendications 2 à 4, caractérisé en ce que les électrolytes alcalin et acide sont respectivement une solution aqueuse d'hydroxyde de sodium et une solution aqueuse d'acide sulfurique et le séparateur est une membrane cationique en un polymère perfluoré comprenant des groupements fonctionnels dérivés de l'acide sulfonique.

7. Procédé selon l'une quelconque des revendications 2 à 6, caractérisé en ce qu'on ajoute à l'anolyte alcalin un stabilisant du peroxyde d'hydrogène sélectionné parmi les polyols et on introduit dans le catholyte acide, des ions électroactifs sélectionnés parmi les ions $Fe^{3+}$, $Cu^{2+}$ et $UO_2^+$.

8. Procédé selon l'une quelconque des revendications 2 à 7, caractérisé en ce qu'on régénère les électrolytes alcalin et acide en les faisant circuler respectivement dans le compartiment cathodique et dans le compartiment anodique d'une seconde pile à combustible dans laquelle on met en oeuvre de l'hydrogène pour le combustible et de l'oxygène et/ou du peroxyde d'hydrogène pour le comburant.

9. Procédé selon la revendication 8, caractérisé en ce que l'oxygène utilisé dans la seconde pile à combustible est prélevé dans un courant d'oxygène généré dans la première pile à combustible, le solde du courant d'oxygène étant utilisé comme comburant dans une troisième pile à combustible.

10. File à combustible comprenant une enceinte (1) divisée, par un séparateur perméable aux ions (2), en un compartiment anodique (3) contenant un anolyte alcalin et un combustible et un compartiment cathodique (4) contenant un catholyte acide et un comburant, caractérisée en ce que le combustible est du peroxyde d'hydrogène.

11. Pile selon la revendication 10, caractérisée en ce que le comburant est du peroxyde d'hydrogène.

12. File selon la revendication 11, caractérisée en ce qu'elle est couplée à un dispositif de régénération de l'anolyte et du catholyte, ce dispositif comprenant une seconde pile à combustible (13) alimentée avec de l'hydrogène (19) à titre de combustible et de l'oxygène (20) et/ou du peroxyde d'hydrogène à titre de comburant, le compartiment anodique (3) et le compartiment cathodique (4) d'une des deux piles (1) étant en communication respectivement avec le compartiment cathodique (16) et avec le compartiment anodique (15) de l'autre pile (13).

## Claims

1. Process for the production of electricity, according to which a fuel and an oxidiser are introduced into a fuel cell, respectively at the interface of an anode and of an alkaline anolyte of the cell and at the interface of a cathode and of an acidic catholyte isolated from the alkaline anolyte by an ion-permeable separator, characterised in that hydrogen peroxide is used for the fuel.

2. Process according to Claim 1, characterised in that hydrogen peroxide is used for the oxidiser.

3. Process according to Claim 1 or 2, characterised in that a difference of at least 7 is maintained between the pH of the alkaline anolyte and the pH of the acidic catholyte.

4. Process according to Claim 3, characterised in that the pH of the alkaline anolyte is maintained at a value of at least 11.63.

5. Process according to Claim 4, characterised in that the pH of the alkaline anolyte is maintained at a value of at least 13 and the pH of the acidic catholyte at a value not exceeding 2.

6. Process according to any one of Claims 2 to 4, characterised in that the alkaline and acidic electrolytes are an aqueous solution of sodium hydroxide and an aqueous solution of sulphuric acid respectively, and the separator is a cationic membrane made of a perfluoro polymer containing functional groups derived from sulphonic acid.

7. Process according to any one of Claims 2 to 6, characterised in that a stabiliser for hydrogen peroxide, selected from polyols is added to the alkaline anolyte, and electroactive ions selected from $Fe^{3+}$, $Cu^{2+}$ and $UO_2^+$ are introduced into the acidic catholyte.

8. Process according to any one of Claims 2 to 7, characterised in that the alkaline and acidic electrolytes are regenerated by being circulated in the cathode compartment and in the anode compartment, respectively, of the second fuel cell in which hydrogen is used for the fuel and oxygen and/or hydrogen peroxide for the oxidiser.

9. Process according to Claim 8, characterised in that the oxygen employed in the second fuel cell is taken from a stream of oxygen generated in the first fuel cell, the remainder of the oxygen stream being employed as oxidiser in a third fuel cell.

10. Fuel cell comprising an enclosure (1) divided by an ion-permeable separator (2) into an anode compartment (3) containing an alkaline anolyte and a fuel and a cathode compartment (4) containing an acidic catholyte and an oxidiser, characterised in that the fuel is hydrogen peroxide.

11. Cell according to Claim 10, characterised in that the oxidiser is hydrogen peroxide.

12. Cell according to Claim 11, characterised in that it is coupled to a device for regenerating the anolyte and the catholyte, this device comprising a second fuel cell (13) fed with hydrogen (19) as fuel and with oxygen (20) and/or hydrogen peroxide as oxidiser, the anode compartment (3) and the cathode compartment (4) of one of the two cells (1) being in communication with the cathode compartment (16) and with the anode compartment (15) respectively of the other cell (13).

## Ansprüche

1. Verfahren zur Elektrizitätserzeugung gemäß dem man in einer Brennstoffzelle einen Brennstoff und einen Sauerstoffträger an der Grenzfläche einer Anode und eines alkalischen Anolyten der Zelle bzw. an der Grenzfläche einer Kathode und eines sauren Katholyten, der von dem alkalischen Anolyten durch einen für Ionen durchlässigen Separator isoliert ist, zuführt, dadurch gekennzeichnet, daß man Wasserstoffperoxyd als Brennstoff einsetzt.

2. Verfahren nach Anspruch 1, dadurch gekennzeichnet, daß man Wasserstoffperoxyd als Sauerstoffträger einsetzt.

3. Verfahren nach Anspruch 1 oder 2, dadurch gekennzeichnet, daß man einen Unterschied von wenigstens gleich 7 zwischen dem pH des alkalischen Anolyten und dem pH des sauren Katholyten aufrechterhält.

4. Verfahren nach Anspruch 3, dadurch gekennzeichnet, daß man den pH des alkalischen Anolyten auf einem Wert von wenigstens gleich 11,63 hält.

5. Verfahren nach Anspruch 4, dadurch gekennzeichnet, daß man den pH des alkalischen Anolyten auf einem Wert von wenigstens gleich 13 und den pH des sauren Katholyten auf einem Wert von höchstens gleich 2 hält.

6. Verfahren nach einem der Ansprüche 2 bis 4, dadurch gekennzeichnet, daß die alkalischen und sauren Elektrolyten eine wässrige Natriumhydroxydlösung bzw. eine wässrige Schwefelsäurelösung sind und der Separator eine kationische Membran aus einem perfluorierten Polymer, das von der Sulfonsäure abgeleitete funktionelle Gruppen umfaßt, ist.

7. Verfahren nach einem der Ansprüche 2 bis 6, dadurch gekennzeichnet, daß man dem alkalischen Anolyten einen Wasserstoffperoxyd-Stabilisator, ausgewählt unter den Polyolen, zufügt und in den sauren Katholyten elektroaktive Ionen, ausgewählt unter den Ionen $Fe^{3+}$, $Cu^{2+}$ und $UO_2^+$, einführt.

8. Verfahren nach einem der Ansprüche 2 bis 7, dadurch gekennzeichnet, daß man die alkalischen und sauren Elektroyten regeneriert, indem man sie in dem kathodischen Raum bzw. anodischen Raum einer zweiten Brennstoffzelle, in der man Wasserstoff als Brennstoff und Sauerstoff und/oder Wasserstoffperoxyd als Sauerstoffträger einsetzt, zirkulieren läßt.

9. Verfahren nach Anspruch 8, dadurch gekennzeichnet, daß der in der zweiten Brennstoffzelle verwendete Sauerstoff einem in der ersten Brennstoffzelle erzeugten Sauerstoffstrom entnommen ist, wobei der Rest des Sauerstoffstroms als Sauerstoffträger in einer dritten Brennstoffzelle verwendet wird.

10. Brennstoffzelle, die eine Ummantelung (1), die durch einen für die Ionen (2) durchlässigen Separator geteilt ist in einen anodischen Raum (3), der einen alkalischen Anolyten und einen Brennstoff enthält und einen kathodischen Raum (4), der einen sauren Katholyten und einen Sauerstoffträger enthält, umfaßt, dadurch gekennzeichnet, daß der Brennstoff Wasserstoffperoxyd ist.

11. Brennstoffzelle nach Anspruch 10, dadurch gekennzeichnet, daß der Sauerstoffträger Wasserstoffperoxyd ist.

12. Zelle nach Anspruch 11, dadurch gekennzeichnet, daß sie mit einer Regenerierungsvorrichtung des Anolyten und Katholyten gekoppelt ist, wobei diese Vorrichtung eine zweite Brennstoffzelle (13) umfaßt, die mit Wasserstoff (19) als Brennstoff und Sauerstoff (20) und/oder Wasserstoffperoxyd als Sauerstoffträger gespeist wird, wobei der anodische Raum (3) und der kathodische Raum (4) einer der beiden Zellen (1) mit dem kathodischen Raum (16) bzw. dem anodischen Raum (15) der anderen Zelle (13) verbunden ist.

## Fig.1

Fig. 2

EP 0 252 559 B1